# EUROPÄISCHE PATENTSCHRIFT

(11) **EP 0 634 308 B1**
(45) Veröffentlichungstag und Bekanntmachung des Hinweises auf die Patenterteilung: **30.12.1998**
(21) Anmeldenummer: 94810407.0
(22) Anmeldetag: 11.07.1994
(51) Int. Cl.: B60R 11/02, H04M 1/72, H04B 1/38

(54) **Einrichtung mit einer Halterung und einem Kabel für ein Handfunktelefon**
Device with a support and a cable for a handheld radio telephone
Dispositif avec support et câble pour un radiotéléphone portatif

(30) Priorität: 14.07.1993 CH 2120/93
(43) Veröffentlichungstag der Anmeldung: 18.01.1995
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Roshardt, Werner Alfred, Dipl.-Phys.

(56) Entgegenhaltungen:
- EP-A- 0 257 431
- EP-A- 0 372 965
- EP-A- 0 391 020
- EP-A- 0 530 719
- DE-A- 4 008 618
- DE-A- 4 015 091
- DE-A- 4 107 995
- DE-U- 8 907 736

## Beschreibung

### Technisches Gebiet

Die Erfindung betrifft eine Einrichtung mit einer Halterung für ein Handfunktelefon und einem mittels eines Steckerelements an einem Steckanschluss des Handfunktelefons anschliessbaren Kabel. Ferner bezieht sich die Erfindung auf eine Halterung und ein Kabel mit Steckerelement für eine solche Einrichtung.

### Stand der Technik

Handfunktelefone (Handies) setzen sich - basierend auf dem paneuropäischen Mobilfunksystem GSM - zunehmend auch in der grenzüberschreitenden Kommunikation durch. Die grossen Vorteile kommen insbesondere dem international auf der Strasse Reisenden zugute. Die Verbesserung des Komforts beim Telefonieren im Auto hat folgerichtig eine wichtige Bedeutung im Handfunktelefonmarkt.

Halterungen für Handapparate (Hör/Sprechteil) von Autotelefonen oder auch für (unabhängige) Handfunktelefone sind in verschiedensten Ausführungsformen bekannt. So wird z.B. in DE -A-40 15 091 eine Halterung für ein Handtelefon gemäss dem Oberbegriff des Patentanspruchs 1 offenbart. In der Praxis erweisen sich die bekannten Halterungen aber nicht als optimal, da sie die Möglichkeiten der neuen GSM-Geräte nicht voll zu nutzen erlauben.

### Darstellung der Erfindung

Aufgabe der Erfindung ist es, eine Einrichtung anzugeben, die eine optimale Nutzung der Möglichkeiten eines modernen (insbesondere digitalen) Handfunktelefons erlaubt. Insbesondere soll die Möglichkeit bestehen, die gegebenenfalls im Fahrzeug vorhandene Stromversorgung, Antennenanlage oder Lautsprecheranlage in flexibler Weise nutzen zu können.

Gemäss der Erfindung wird die Aufgabe durch eine Einrichtung der eingangs genannten Art gelöst, die sich durch Verriegelungsmittel auszeichnet, die derart ausgebildet sind, dass das Handfunktelefon wahlweise samt angeschlossenem Steckerelement oder ohne dieses entriegelt und der Halterung entnommen und anschliessend wieder in die Halterung eingeführt und verriegelt werden kann, wobei im letzteren Fall das Steckerelement in der Halterung arretiert bleibt.

Vorzugsweise sind die Verriegelungsmittel manuell betätigbar.

Das Handfunktelefon kann also wahlweise mit oder ohne die im Fahrzeug vorhandenen technischen Gegebenheiten benutzt werden. Wird das Handfunktelefon ohne Kabelanschluss betrieben, so ist der Stecker in der Halterung versorgt und darin arretiert. Unabhängig von der genannten Arretierung kann das Handfunktelefon selbst in der Halterung arretiert werden. Schliesslich kann das Handfunktelefon mit angeschlossenem Stecker (als Einheit) der Halterung entnommen bzw. darin verriegelt werden.

Vorzugsweise umfassen die Verriegelungsmittel zwei separate Tasten zum Ver- bzw. Entriegeln des Handfunktelefons mit oder ohne Steckerelement. Mit der einen Taste wird die Ver- bzw. Entriegelung des Handfunktelefons und mit der anderen diejenige des Steckerelements betätigt. Alternativ kann ein Verriegelungsmechanismus vorgesehen sein, bei dem mit der einen Taste nur das Handfunktelefon und mit der anderen Taste Handfunktelefon und Steckerelement zugleich entriegelt werden. Anstelle von zwei separaten Tasten kann auch ein Mehrfachschalter, ein Kippschalter oder ein Schieber vorgesehen sein.

Vorzugsweise ist die Halterung als Köcher ausgebildet, so dass das Handfunktelefon in Richtung seiner Längsachse einsteckbar ist, wobei es gegebenenfalls zugleich an einem Stecker angeschlossen wird. Im Prinzip kann die Halterung auch so gestaltet sein, dass das Handfunktelefon von vorne oder u. U. auch von der Seite einzuführen ist.

Gemäss einer besonders bevorzugten Ausführungsform sind die erwähnten Tasten (oder ganz allgemein die Betätigungsmittel) an einander gegenüberliegenden Längsseiten der Halterung angeordnet. Die seitliche Anordnung ermöglicht eine einfache Realisierung des Ver- bzw. Entriegelungsmechanismus. Vom Bedienungskomfort her wird es u. U. besonders vorteilhaft sein, die Tasten an der Vorderseite der Halterung (neben der Oeffnung des Köchers) auszubilden.

Vorzugsweise umfassen die Verriegelungsmittel zum Verriegeln des Handfunktelefons ein in einen Batterie- oder Akkumulatorfachschlitz des Handfunktelefons eingreifendes Riegelelement. Da die meisten Handies einen solchen Schlitz an ihrer Rückseite aufweisen, kann die erfindungsgemässe Halterung realisiert werden, ohne dass an den bereits existierenden Gehäuseformen der Handies Aenderungen vorgenommen werden müssten. Es ist natürlich nicht zwingend, auf den Batterie-bzw. Akkumulatorfachschlitz zurückzugreifen. Die sinngemässe Wirkung kann auch an anderen Vertiefungen oder Vorsprüngen eines Handy-Gehäuses realisiert werden.

Wird das Handfunktelefon als Handapparat eingesetzt, so kann es sinnvoll sein, in der Halterung ein auf das einzusteckende Handfunktelefon abgestimmtes Element vorzusehen, insbesondere einen geeignet plazierten Magneten, welches resp. welcher beim Einstecken des Handfunktelefons zur Unterbrechung der Linie führt. Es ist dann nicht mehr nötig, die bei Handfunktelefonen vorgesehene "Gesprächsende"-Taste zu betätigen.

Im Sinn einer weiteren bevorzugten Ausführungsform kann ein Auswerfermechanismus vorgesehen sein, so dass das Handfunktelefon beim Entriegeln resp. beim Betätigen der Entriegelungstasten automatisch aus der Verriegelungsposition entfernt wird.

Ein Kabel mit einem Steckerelement zum Anschliessen an ein in die erfindungsgemässe Halterung einführbares Handfunktelefon zeichnet sich dadurch aus, dass der Stecker zur wählbaren Arretierung in der Halterung ausgebildet ist. Insbesondere ist er mit einer geeignet ausgebildeten Vertiefung, in welche eine Verriegelungsnase der Halterung eingreifen kann, ausgestattet. Für ein Handfunktelefon, bei dem Steckanschluss (D-Stecker) und Antennenstecker an verschiedenen Gehäuseseiten (z. B. an Unterseite bzw. der Längsseite) vorgesehen sind, hat das Kabel mit Steckerelement vorzugsweise eine steif abstehende, gegebenenfalls abgewinkelte Antennenzuführung, die in die Antennenanschlussbuchse des Handfunktelefons eingesteckt werden kann. Sind D- und koaxialer Steckanschluss beim Handy unmittelbar nebeneinander vorgesehen, so erübrigt sich die genannte steife Antennenzuführung.

Das Kabel umfasst sowohl die 15 Adern eines D-Steckers als auch ein Koaxialkabel für den Antennenanschluss. Die Adern des D-Steckers sind vorzugsweise in einem Spiralkabel geführt. Im Prinzip kann das Koaxialkabel in der gleichen Spirale geführt sein. Um die Dämpfung des Antennensignals möglichst gering zu halten, wird das Koaxialkabel aber vorzugsweise nahe an oder in der Spiralachse des Spiralkabels geführt.

Weitere vorteilhafte Merkmalskombinationen und Ausführungsformen der Erfindung ergeben sich aus der Gesamtheit der Patentansprüche und der Detailbeschreibung.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: Eine erfindungsgemässe Halterung von vorn;
- Fig. 2: die erfindungsgemässe Halterung gemäss Fig. 1 im Längsschnitt C-C;
- Fig. 3: eine Darstellung des Verriegelungsmechanismus für das Steckerelement im Schnitt B-B;
- Fig. 4: eine Darstellung des Verriegelungsmechanismus für das Handfunktelefon im Schnitt A-A;
- Fig. 5a-d: eine Abdeckplatte für den "kleinen" Verriegelungsmechanismus;
- Fig. 6a,b: einen Verriegelungsschieber in der Draufsicht resp. Seitenansicht;
- Fig. 7a-c: verschiedene Ansichten einer Verriegelungsnase;
- Fig. 8a-e: verschiedene Ansichten eines Kabels mit Steckerelement und Antennenführung.

Grundsätzlich sind in den verschiedenen Zeichnungen gleiche Teile mit gleichen Bezugszeichen versehen.

### Wege zur Ausführung der Erfindung

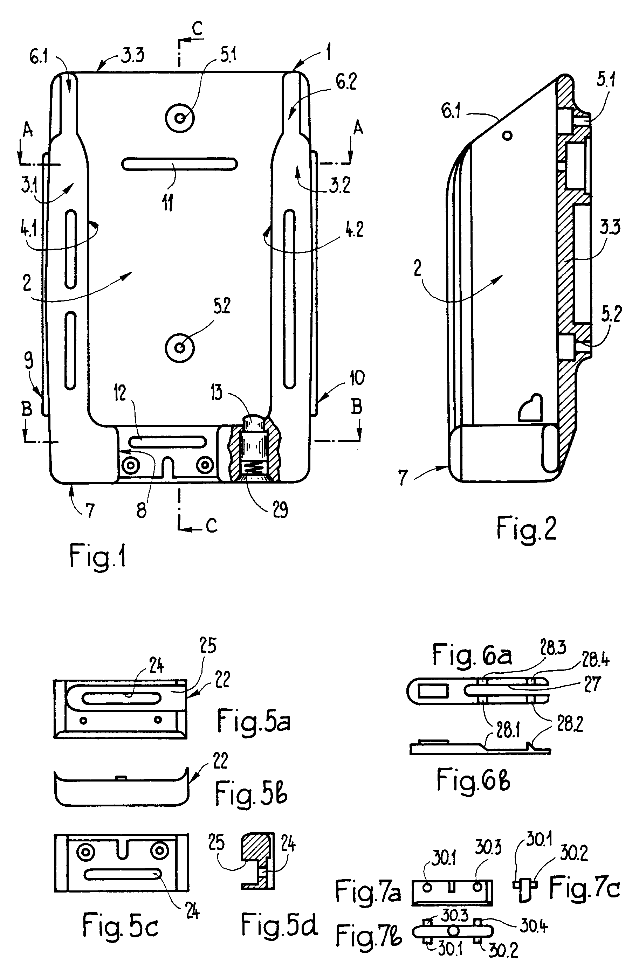

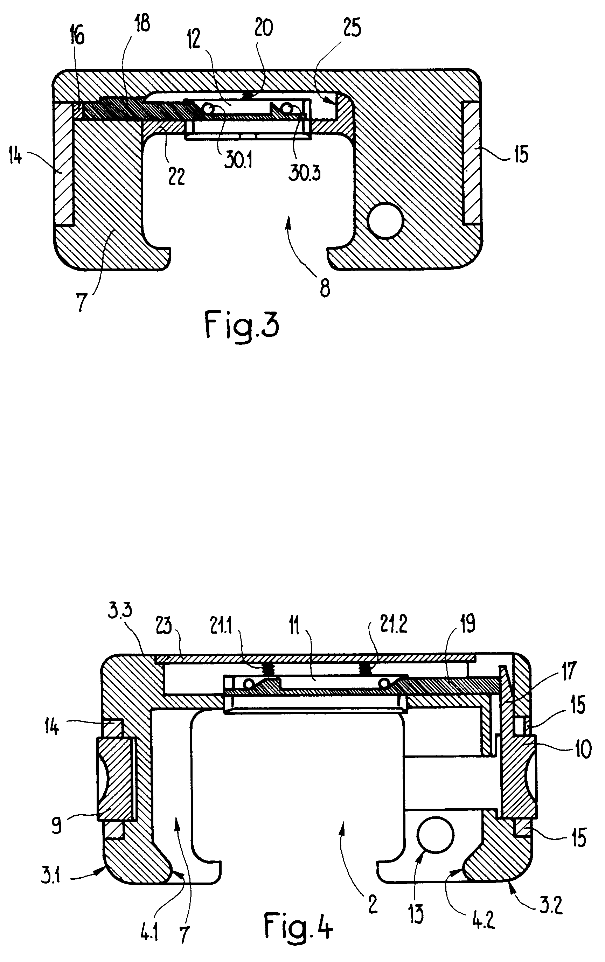

In den Fig. 1 und 2 ist eine erfindungsgemässe Halterung 1 von vorn und im Längsschnitt gezeigt. Sie besteht vorzugsweise aus Kunststoff und ist z. B. mindestens halb so lang wie das in sie einsteckbare Handfunktelefon. Sie ist in der Art eines vorne offenen Köchers ausgebildet, so dass das Handfunktelefon von oben einführbar ist.

Eine Rückwand 3.3 und zwei schmale Seitenwände 3.1, 3.2 begrenzen einen Innenraum 2, in welchen das Handfunktelefon (Handy) von oben einführbar ist. Die Seitenwände 3.1, 3.2 sind mit vorstehenden, die offene Vorderseite begrenzenden Rändern 4.1, 4.2 ausgestattet (vgl. auch Fig. 4). Rückwand 3.3 und Seitenwände 3.1, 3.2 samt Rändern 4.1, 4.2 bilden so eine schienenartige Führung für das einzusteckende Handfunktelefon.

Im übrigen haben die Seitenwände 3.1, 3.2 (z. B. um 45°) nach unten abgeschrägte Oberkanten 6.1, 6.2. Dadurch wird nicht nur die Aesthetik verbessert, sondern auch das Einführen des Handies erleichtert.

Auf der Längsmittelachse der Rückwand 3.3 sind z. B. zwei Bohrungen 5.1, 5.2 vorgesehen, um die Halterung im Fahrgastraum an geeigneter Stelle festschrauben zu können.

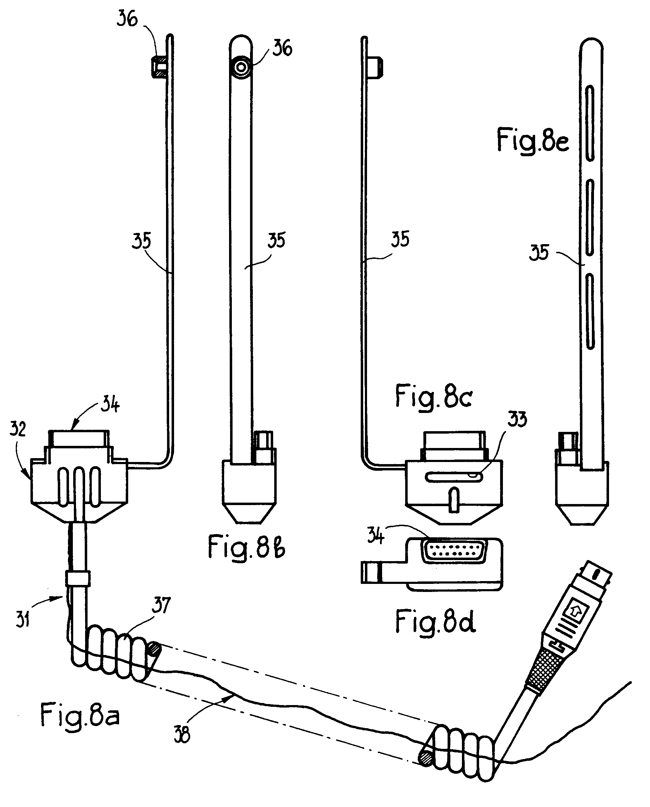

An ihrer Unterseite 7 hat die Halterung 1 eine Oeffnung 8 (vgl. auch Fig. 3) für ein Steckerelement gemäss Fig. 8a-e. Die Oeffnung 8 stellt im Prinzip einen Schacht in der Unterseite 7 dar, welcher von vorne teilweise zugänglich ist. Am Rande der Oeffnung 8 ist eine Verriegelungsnase des Verriegelungsmechanismus' für das Steckerelement - im folgenden der "kleine" Verriegelungsmechanismus genannt - vorgesehen. Der Verriegelungsmechanismus für das Handy - im folgenden der "grosse" Verriegelungsmechanismus genannt - ist im oberen Bereich der Halterung in der Rückwand 3.3 vorgesehen. In Fig. 1 ist die entsprechende Verriegelungsnase 11 zu sehen.

Der "kleine" Verriegelungsmechanismus und der "grosse" Verriegelungsmechanismus können manuell über die linke resp. rechte Taste 9 resp. 10 betätigt werden. Diese Tasten 9, 10 sind ziemlich gross gestaltet und nehmen gut zwei Drittel bis drei Viertel der Länge der Seitenwände 3.1, 3.2 ein. Die Tasten 9 resp. 10 werden jeweils von einer Abdeckung 14 resp. 15 beweglich gehalten.

Anhand der Fig. 3, 5a-d, 6a,b und 7a-c soll eine bevorzugte Ausführungsform des Verriegelungsmechanismus erläutert werden.

An der linken Taste 9 ist ein Fortsatz 16 ausgebildet, welcher auf einen in Querrichtung (bezogen auf die Längsachse der Halterung 1) verschiebbaren Schieber 18 wirkt. Dieser weist wie in Fig. 6a gezeigt einen Längsschlitz 27 auf, in welchem die plattenförmige Verriegelungsnase 12 Platz hat. Die beiden durch den Schlitz 27 gebildeten Beine des Verriegelungsschiebers 18 sind mit je zwei Rampen 28.1, 28.2 resp. 28.3, 28.4 versehen. Auf diesen Rampen 28.1, ..., 28.4 gleiten vier, von der Verriegelungsnase seitlich abstehende Zapfen 30.1, ..., 30.4. Eine Feder 20 drückt die Verriegelungsnase 12 nach vorne in die Oeffnung 8. Schieber 18 und Verriegelungsnase 12 werden von einer Deckplatte 22 geführt.

Diese ist in den Fig. 5a-d dargestellt. Sie weist einen Schlitz 24 für den Durchtritt der Nase 12 auf. Eine den Schlitz 24 umgebende Ausnehmung 25 bildet die Führung für den Schieber 18. Letzterer bewegt sich in Richtung der Schlitzlängsachse. Die Verriegelungsnase 12 ihrerseits ist in Durchstossrichtung des Schlitzes 24, d. h. senkrecht zum Schieber 18 beweglich. Die beiden Schlitze 24 und 27 sind miteinander (in Durchstossrichtung) fluchtend gehalten.

Wie die Draufsicht gemäss Fig. 5b zeigt, ist die Deckplatte 22 an den Ecken sichelförmig abgerundet resp. zugespitzt, um die Oeffnung 8 sauber abzuschliessen.

Im Ruhezustand ragt die Verriegelungsnase 12 in die Oeffnung 8 hinein, so dass das Steckerelement arretiert wird. Wird die Taste 9 gedrückt, so wird der Schieber 18 (in Fig. 3 nach rechts) verschoben und die mit ihren Zapfen 30.1, ..., 30.4 auf den Rampen 28.1, ..., 28.4 gleitende Verriegelungsnase 12 gegen die Kraft der Feder 20 zurückgezogen. Das Steckerelement wird freigegeben.

In ähnlicher Weise ist der "grosse" Verriegelungsmechanismus realisiert. Wie aus Fig. 4 zu erkennen ist, verfügt die Taste 10 über einen Fortsatz 17, welcher auf einen (analog zum Schieber 18) gabelförmig geschlitzten Schieber 19 wirkt. Die Verriegelungsnase 11 gleitet ebenfalls mit Zapfen auf Rampen und wird von Federn 21.1, 21.2 in den Innenraum 2 gedrückt. Die Federn 21.1, 21.2 sind auf einer von hinten an der Rückwand 3.3 befestigten Deckplatte 23 abgestützt.

Gemäss einer besonders bevorzugten Ausführungsform ist in der Unterseite 7 der Halterung (neben der Oeffnung 8) ein Auswerfermechanismus vorgesehen. Dieser umfasst im wesentlichen einen Auswerferbolzen 13, welcher von unten in den Innenraum 2 ragt und von einer Feder 29 nach oben gedrückt wird. Wird das Handy in die Halterung 1 eingeführt, dann wird der Auswerferbolzen entgegen der Federkraft der Feder 29 nach unten gedrückt. Dadurch dass das Handy durch die "grosse" Verriegelung arretiert ist, bleibt die Feder 29 komprimiert. Sobald aber die "grosse" Verriegelung betätigt wird, wird das Handy durch den Auswerferbolzen 13 einige Millimeter nach oben aus der Verriegelungsposition gedrückt. Beim Loslassen der Taste 10 kann die Verriegelungsnase 11 nicht mehr in den am Handy zur Verriegelung verwendeten Schlitz zurück. Das Handy kann also ohne weiteres entnommen werden.

Fig. 8a-e zeigt eine bevorzugte Ausführungsform eines erfindungsgemässen Kabels 31 mit Steckerelement 32. Letzteres weist an einer Seite eine Vertiefung 33 auf (Fig. 8c), in die die Verriegelungsnase 12 eingreifen kann. Das Steckerelement weist einen 15-poligen D-Stecker 34 auf, welcher an das Handfunktelefon an dessen unteren Schmalseite einsteckbar ist. Er ermöglicht z. B. die Stromversorgung via Autobatterie, die Ausstrahlung des Empfangssignals via Lautsprecheranlage u.a.m.

Seitlich des D-Steckers 34 wegragend ist eine abgewinkelte Antennenzuführung 35 vorgesehen. Sie ist steif, ev. leicht flexibel, und läuft - bei eingestecktem D-Stecker - entlang der (im vorliegenden Fall rechten) Seite des Handfunktelefons nach oben zum Antennenanschluss. Am Ende der stabförmigen Antennenzuführung 35 ist zu diesem Zweck ein Koaxialstecker 36 vorgesehen. Damit dieser eingesteckt werden kann, muss die Antenne des Handfunktelefons abgenommen werden. (Damit die abgenommene Antenne nicht verlorengehen kann, kann die Halterung z. B. einen Steck-Platz für erstere aufweisen.) Ist das Handy auf diese Weise angeschlossen, dann wird für den Empfang resp. das Senden die Antennenanlage des Fahrzeugs benutzt. Diese ermöglicht nicht nur einen besseren Empfang, sondern eliminiert auch die Störungsgefahr, die von einer im Fahrgastraum betriebenen HF-Antenne auf die Fahrzeugelektronik ausgeht.

Ob die abgewinkelte stabförmige Antennenzuführung 35 erforderlich ist oder nicht, hängt von den jeweiligen Gegebenheiten des Handfunktelefons ab. Einfacher und bequemer ist es natürlich, wenn der koaxiale Antennenanschluss des Handies unmittelbar neben dem D-Stecker vorgesehen ist.

Die Leitungen des D-Steckers 34 sind vorzugsweise in einem Spiralkabel 37 geführt. Das Koaxialkabel 38 der Antennenzuführung ist gemäss der Erfindung möglichst nahe oder in der Achse des Spiralkabels 37 geführt. Auf diese Weise kann die Signaldämpfung beträchtlich geringer gehalten werden, als wenn das Koaxialkabel 38 selbst in der Spirale geführt wäre. Obwohl das Koaxialkabel nicht mit dem Spiralkabel verbunden sein muss, hängt es nicht frei herum, sondern ist gut versorgt.

Bei der oben beschriebenen Ausführungsform hängt das Kabel 31 bei in der Halterung 1 arretiertem Steckerelement frei nach unten heraus. Im Prinzip kann die Halterung auch einen separaten resp. zusätzlichen Kabelaufnahmeraum aufweisen, der es aufnimmt, wenn das Steckerelement in der Halterung verbleibt und aus dem es herausgezogen werden kann, wenn das Handfunktelefon mit angeschlossenem Stecker benutzt wird. Halterung und Kabel können also separate oder zusammenhängende Zubehörteile für ein Handfunktelefon sein.

Selbstverständlich beschränkt sich die Erfindung nicht auf die beschriebene Ausführungsform. So können z. B. Form und Funktion der Halterung so geändert werden, dass das Handfunktelefon nicht wie in einem Köcher gehalten wird, die Verriegelungsmechanismen anders plaziert und mit anderen Mitteln verwirklicht werden, der Auswerfermechanismus weggelassen oder Kabel und Steckerelement in anderer Weise ausgebildet werden.

Zusammenfassend kann festgehalten werden, dass die erfindungsgemässe Halterung es dem Benutzer ermöglicht, das Handy in vielfältiger Weise mit den Gegebenheiten des Fahrzeugs zu kombinieren. Ist das Handy am Kabel angeschlossen, so kann nicht nur die Autobatterie als Stromversorgung genutzt werden, sondern es kann wie bei einem herkömmlichen Handapparat eines Autotelefons bedarfsgerecht die Antennenanlage des Fahrzeugs eingesetzt werden. Der Benutzer hat dabei immer die freie Wahl, ob er das Handfunktelefon als solches, als Handapparat oder im handsfree-Betrieb gebrauchen will.

## Patentansprüche

1. Einrichtung mit einer Halterung (1) für ein Handfunktelefon und mit einem mittels eines Steckerelements (32) an einem Steckanschluss des Handfunktelefons anschliessbaren Kabel (31), gekennzeichnet durch Verriegelungsmittel (9, 18, 20, 12; 10, 19, 11, 21.1, 21.2), die derart ausgebildet sind, dass das Handfunktelefon wahlweise samt angeschlossenem Steckerelement (32) oder ohne dieses entriegelt und der Halterung (1) entnommen und anschliessend wieder in die Halterung (1) eingeführt und verriegelt werden kann, wobei im letzteren Fall das Steckerelement (32) in der Halterung (1) arretiert bleibt.

2. Halterung (1) für eine Einrichtung nach Anspruch 1, dadurch gekennzeichnet, dass die Verriegelungsmittel (9, 18, 20, 12; 10, 19, 11, 21.1, 21.2) manuell betätigbar sind.

3. Halterung nach Anspruch 2, dadurch gekennzeichnet, dass die Verriegelungsmittel (9, 18, 20, 12; 10, 19, 11, 21.1, 21.2) zwei separate Tasten (9, 10) zum Ver- bzw. Entriegeln des Handfunktelefons mit bzw. ohne Steckerelement (32) umfassen.

4. Halterung nach Anspruch 2 oder 3, dadurch gekennzeichnet, dass sie als Köcher ausgebildet ist, so dass das Handfunktelefon in Richtung seiner Längsachse einsteckbar ist.

5. Halterung nach Anspruch 3 und 4, dadurch gekennzeichnet, dass die Tasten (9, 10) an einander gegenüberliegenden Längsseiten (3.1, 3.2) der Halterung (1) angeordnet sind.

6. Halterung nach einem der Ansprüche 2 bis 5, dadurch gekennzeichnet, dass die Verriegelungsmittel (9, 18, 20, 12; 10, 19, 11, 21.1, 21.2) zum Ver- bzw. Entriegeln des Handfunktelefons ein in einem Batterie- bzw. Akkumulatorfachschlitz des Handfunktelefons eingreifendes Verriegelungselement (11) aufweisen.

7. Halterung (1) nach einem der Ansprüche 2 bis 6, dadurch gekennzeichnet, dass sie ein auf das einzusteckende Handfunktelefon abgestimmtes Element aufweist, welches beim eingesteckten Handfunktelefon als Linienunterbrecher wirkt.

8. Halterung nach einem der Ansprüche 2 bis 7, dadurch gekennzeichnet, dass sie einen Auswerfermechanismus aufweist, so dass das Handfunktelefon beim Entriegeln aus der Verriegelungsposition entfernt wird.

9. Kabel (31) mit Steckerelement (32) für eine Einrichtung nach Anspruch 1, dadurch gekennzeichnet, dass das Steckerelement (32) zur wahlweisen Arretierung in der Halterung (1) ausgebildet (33) ist.

10. Kabel (31) mit Steckerelement (32) nach Anspruch 9, gekennzeichnet durch eine steif abstehende Antennenzuführung (35), die bei - an einer Unterseite des Handfunktelefons - eingestecktem Stecker (34) an eine - an der Seite des Handfunktelefons vorgesehene - Antennenanschlussbuchse angeschlossen werden kann.

11. Kabel (31) mit Steckerelement (32) nach Anspruch 9 oder 10, dadurch gekennzeichnet, dass es ein Spiralkabel (37) und ein nahe an oder in der Spiralachse geführtes Koaxialkabel (38) umfasst.

## Claims

1. Device having a holder (1) for a hand-held radiotelephone and having a cable (31) arranged to be connected to an outlet of the hand-held radiotelephone by means of a plug element (32), characterised by locking means (9, 18, 20, 12; 10, 19, 11, 21.1, 21.2), which are constructed so that the hand-held radiotelephone can be released, optionally together with the connected plug element (32) or without the same, and removed from the holder (1) and can subsequently be reintroduced into the holder (1) and locked, in the latter case the plug element (32) remaining located in position in the holder (1).

2. Holder (1) for a device according to claim 1, characterised in that the locking means (9, 18, 20, 12; 10, 19, 11, 21.1, 21.2) are manually operable.

3. Holder according to claim 2, characterised in that the locking means (9, 18, 20, 12; 10, 19, 11, 21.1, 21.2), comprise two separate buttons (9, 10) for locking and releasing the hand-held radiotelephone with or without plug element (32).

4. Holder according to claim 2 or 3, characterised in that it is in the form of a socket holder, so that the hand-held radiotelephone is insertable in the direction of its longitudinal axis.

5. Holder according to claims 3 and 4, characterised in that the buttons (9, 10) are arranged on opposite long sides (3.1, 3.2) of the holder (1).

6. Holder according to any one of claims 2 to 5, characterised in that the locking means (9, 18, 20, 12; 10, 19, 11, 21.1, 21.2) for locking and releasing the hand-held radiotelephone comprise a locking element (11), which engages in a battery compartment slot of the hand-held radiotelephone.

7. Holder (1) according to any one of claims 2 to 6, characterised in that it comprises an element tuned to the hand-held radiotelephone to be inserted, which element acts as a line interrupter when the hand-held radiotelephone is inserted.

8. Holder according to any one of claims 2 to 7, characterised in that it comprises an ejector mechanism, so that the hand-held radiotelephone, as it is released, is expelled from the locked position.

9. Cable (31) having a plug element (32) for a device according to claim 1, characterised in that the plug element (32) is designed (33) for optional retention in the holder (1).

10. Cable (31) having a plug element (32) according to claim 9, characterised by a rigidly projecting aerial lead (35) which, when a plug (34) is plugged in - at an underside of the hand-held radiotelephone -, can be connected to an aerial connecting socket provided at the side of the hand-held radiotelephone.

11. Cable (31) having a plug element (32) according to claim 9 or 10, characterised in that it comprises a coiled cable (37) and a coaxial cable (38) led close to or along the axis of the coil.

## Revendications

1. Dispositif comportant un support (1) pour un téléphone portable et un câble (31) pouvant être raccordé au moyen d'un élément de connecteur (32) à une borne de connexion du téléphone portable, caractérisé par des moyens de verrouillage (9,18,20,12;10,19,11,21.1,21.2), qui sont agencés de telle sorte que le téléphone manuel peut être déverrouillé et retiré du support (1) au choix conjointement avec l'élément de connecteur (32) raccordé ou sans cet élément, et ensuite être à nouveau introduit et verrouillé dans le support (1), l'élément de connecteur (32) restant, dans ce dernier cas, bloqué dans le support (1).

2. Support (1) pour un dispositif selon la revendication 1, caractérisé en ce que les moyens de verrouillage (9,18,20,12;10,19,11,21.1,21.2) peuvent être actionnés manuellement.

3. Support selon la revendication 2, caractérisé en ce que les moyens de verrouillage (9,18,20,12;10,19,11, 21.1,21.2) comprennent deux touches séparées (9,10) pour verrouiller ou déverrouiller le téléphone portable avec ou sans l'élément de connecteur (32).

4. Support selon la revendication 2 ou 3, caractérisé en ce qu'il est agencé sous la forme d'un carquois de sorte que le téléphone mobile peut être enfiché dans la direction de son axe longitudinal.

5. Support selon les revendications 3 et 4, caractérisé en ce que les touches (9,10) sont disposées sur des côtés longitudinaux réciproquement opposés (3.1, 3.2) du support (1).

6. Support selon l'une des revendications 2 à 5, caractérisé en ce que les moyens de verrouillage (9,18,20, 12;10,19,11,21.1,21.2) servant à verrouiller et déverrouiller le téléphone portable possèdent un élément de verrouillage (11) qui s'engage dans une fente de logement de piles ou d'accumulateurs du téléphone portable.

7. Support (1) selon l'une des revendications 2 à 6, caractérisé en ce qu'il comporte un élément, qui est adapté au téléphone portable à enficher et qui agit en tant qu'interrupteur de ligne lorsque le téléphone portable est à l'état enfiché.

8. Support selon l'une des revendications 2 à 7, caractérisé en ce qu'il comporte un mécanisme formant éjecteur de sorte qu'on retire le téléphone portable lors du déverrouillage à partir de la position verrouillée.

9. Câble (31) comportant un élément de connecteur (32) pour un dispositif selon la revendication 1, caractérisé en ce que l'élément de connecteur (32) est agencé (33) pour assurer un blocage au choix dans le support (1).

10. Câble (31) comportant un élément de connecteur (32) selon la revendication 9, caractérisé par une arrivée d'antenne (35), qui est un système rigide en saillie et qui, dans le cas où une prise mâle (34) est enfichée - sur l'extrémité inférieure du téléphone portable -, peut être raccordée à une douille de raccordement d'antenne - prévue sur le téléphone portable.

11. Câble (31) comportant un élément de connecteur (32) pour un dispositif selon la revendication 9 ou 10, caractérisé en ce qu'il comprend un câble enroulé en hélice (37) et un câble coaxial (38) guidé à proximité de ou sur l'axe de l'hélice.
